(19) **Europäisches Patentamt**
**European Patent Office**
**Office européen des brevets**

(11) **EP 2 753 509 B1**

(12) **EUROPÄISCHE PATENTSCHRIFT**

(45) Veröffentlichungstag und Bekanntmachung des Hinweises auf die Patenterteilung:
**30.05.2018  Patentblatt 2018/22**

(21) Anmeldenummer: **12756203.1**

(22) Anmeldetag: **07.09.2012**

(51) Int Cl.:
***B60T 8/17*** *(2006.01)*

(86) Internationale Anmeldenummer:
**PCT/EP2012/067545**

(87) Internationale Veröffentlichungsnummer:
**WO 2013/034714 (14.03.2013 Gazette 2013/11)**

(54) **BREMSREGELUNGSEINRICHTUNG FÜR EIN SCHIENENFAHRZEUG, BREMSANLAGE FÜR EIN SCHIENENFAHRZEUG, SCHIENENFAHRZEUG UND VERFAHREN ZUR REGELUNG EINER BREMSANLAGE EINES SCHIENENFAHRZEUGS**

BRAKE REGULATION DEVICE FOR A RAIL VEHICLE, BRAKE SYSTEM FOR A RAIL VEHICLE, RAIL VEHICLE AND METHOD FOR REGULATING A BRAKE SYSTEM OF A RAIL VEHICLE

DISPOSITIF DE RÉGULATION DE FREINAGE POUR UN VÉHICULE FERROVIAIRE, SYSTÈME DE FREINAGE D'UN VÉHICULE FERROVIAIRE, VÉHICULE FERROVIAIRE ET PROCÉDÉ DE RÉGULATION D'UN SYSTÈME DE FREINAGE D'UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2011  DE 102011113072**

(43) Veröffentlichungstag der Anmeldung:
**16.07.2014  Patentblatt 2014/29**

(73) Patentinhaber: **KNORR-BREMSE Systeme für Schienenfahrzeuge GmbH 80809 München (DE)**

(72) Erfinder:
• **MAYER, Reinhold**
  **85757 Karlsfeld (DE)**
• **RASEL, Thomas**
  **85635 Höhenkirchen-Siegertsbrunn (DE)**

(56) Entgegenhaltungen:
**WO-A1-2009/074265      CH-A5- 671 377
DE-A1- 3 929 497        DE-A1- 4 333 281
DE-A1-102006 057 813**

**Beschreibung**

Die vorliegende Erfindung betrifft eine Bremsregelungseinrichtung für ein Schienenfahrzeug, eine Bremsanlage mit einer derartigen Bremsregelungseinrichtung, ein Schienenfahrzeug sowie ein Verfahren zur Regelung einer Bremsanlage eines Schienenfahrzeugs. Eine Bremsregelungseinrichtung mit den Merkmalen des Oberbegriffs des Anspruchs 1 ist aus der DE 43 33 281 A1 bekannt.

Bei der Bremsung von Schienenfahrzeugen über eine Reibungsbremseinrichtung besteht grundsätzlich das Problem, dass eine zur Bremsung des Fahrzeugs vorgesehene Kraft über den Kontakt zwischen Rad und Schiene aufgenommen werden muss. Die Aufnahmefähigkeit des Kontakts zwischen Rad und Schiene für Kraft wird häufig durch einen als Kraftschlussbeiwert oder Adhäsionsbeiwert bezeichneten Parameter beschrieben. Der Adhäsionsbeiwert kann insbesondere in Abhängigkeit von äußeren Umständen stark variieren. Dabei kann es beispielsweise eine Rolle spielen, ob und welche Zwischenschichten sich zwischen Rad und Schiene gebildet haben. Darüber hinaus ist der Adhäsionsbeiwert von einem Radschlupf S abhängig, der die Differenz zwischen der Translationsgeschwindigkeit des Fahrzeugs und der Umfangsgeschwindigkeit eines Rades bezogen auf die Translationsgeschwindigkeit beschreibt und durch die folgende Gleichung dargestellt werden kann:

$$S = (v_T - v_R) / v_T \qquad (1),$$

wobei $v_T$ die Translationsgeschwindigkeit des Schienenfahrzeugs ist und $v_R$ die Umfangsgeschwindigkeit des betrachteten Rades, das heißt die Geschwindigkeit, mit der sich ein Punkt am Umfang des Rades bewegt. Um eine möglichst effiziente Bremsung eines Fahrzeugs zu ermöglichen, wird im Allgemeinen versucht, bei gegebenen äußeren Bedingungen die zu bremsenden Räder in einem Schlupfbereich zu betreiben, bei dem ein möglichst hoher Adhäsionsbeiwert vorliegt und so möglichst viel Kraft zur Bremsung des Schienenfahrzeugs über den Rad-Schiene-Kontakt aufgenommen werden kann. Dazu wird angestrebt, ein Maximum in einem Kurvenverlauf des Adhäsionsbeiwerts in Abhängigkeit vom Radschlupf und der Zeit zu finden. Aufgrund der komplexen Zusammenhänge zwischen Adhäsionsbeiwert und äußeren Bedingungen ist es allerdings nicht immer einfach oder möglich, zuverlässig ein derartiges Maximum zu bestimmen, etwa weil ein falscher Kurvenverlauf der Adhäsionsbeiwert-Radschlupf-Funktion zugrunde gelegt wird. Dies kann zu ineffizienter Bremsung von Rädern und damit einer Verlängerung des Bremswegs führen.

Es ist eine Aufgabe der vorliegenden Erfindung, eine Bremsung insbesondere bei unbekanntem Verlauf der Adhäsionsbeiwert-Radschlupf-Funktion zu verbessern und eine sichere Bremsung zu gewährleisten. Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug ein oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Eine Bremsanlage kann beispielsweise eine pneumatische, insbesondere eine elektropneumatische, eine hydraulische, insbesondere eine elektrohydraulische oder eine elektrische oder elektromechanische Bremsanlage sein. Eine elektropneumatische oder elektrohydraulische Bremsanlage kann insbesondere elektrisch ansteuerbare Ventile wie Magnetventile oder elektrisch ansteuerbare Vorsteuerventile aufweisen. Insbesondere kann eine elektropneumatische oder elektrohydraulische Bremsanlage eine Steuerventileinrichtung mit elektrisch ansteuerbaren Ventilen aufweisen. Eine Bremseinrichtung kann zur Bremsung eines einzelnen Rades und/oder einer Achse des Schienenfahrzeugs vorgesehen sein. Eine Bremseinrichtung kann insbesondere eine oder mehrere pneumatische, hydraulische oder elektrische oder elektromechanische Bremsvorrichtungen aufweisen. Eine hydraulische oder pneumatische Bremsvorrichtung kann einen Krafterzeuger wie einen pneumatischen oder hydraulischen Zylinder aufweisen. Ein solcher Krafterzeuger kann bei Beaufschlagung mit einem Druck eine Reibbremseinrichtung betätigen. Eine elektrische oder elektromechanische Bremsvorrichtung kann einen elektrisch betätigbaren Krafterzeuger aufweisen. Ein solcher Krafterzeuger kann bei Versorgung mit einem Bremsstrom eine Reibbremseinrichtung betätigen. Eine Reibbremseinrichtung kann dabei beispielsweise eine Scheibenbremse mit einer Bremsscheibe sein, die dadurch betätigt wird, dass über eine Bremszange ein oder mehrere Reibbremselemente wie Bremsbacken in Kontakt mit der Bremsscheibe gebracht werden, um so eine Bremswirkung zu erzeugen. Eine Reibbremseinrichtung kann einen Bremsklotz mit einem Bremsbelag aufweisen, der durch einen Krafterzeuger derart betätigbar ist, dass der Bremsklotz mit einer Radlauffläche in Kontakt kommt, um Bewegungsenergie in Wärme umzusetzen und das zu bremsende Rad abzubremsen. Der auf den Krafterzeuger beziehungsweise den pneumatischen oder hydraulischen Zylinder ausgeübte Druck kann als Bremsdruck bezeichnet werden. Die beim Betätigen der Reibbremseinrichtung durch den Krafterzeuger ausgeübte Kraft kann als Bremskraft bezeichnet werden. Diese Bremskraft hängt von dem ausgeübten Bremsdruck sowie von der Konstruktion und Funktionsweise der Reibbremsvorrichtung ab, etwa von einem Reibbeiwert zwischen einem Belag eines Bremsklotzes oder einer Bremsbacke und der Radlauffläche oder der Bremsscheibe. Eine Bremskraft kann auf ein ruhendes oder bewegtes Rad ausgeübt werden. Wird auf ein bewegtes Rad eine Bremskraft ausgeübt, entsteht ein Bremsmoment. Eine Bremsvorrichtung kann eine oder mehrere Reibbremseinrichtungen aufweisen, um ein oder mehrere Räder beziehungsweise eine oder mehrere Achsen abzubremsen. Jeweils einer Reibbremseinrichtung oder mehreren einander zugeordneten Reibbremseinrichtungen kann ein Krafterzeuger zugeordnet sein. Es kann vorgesehen sein, dass die Reibbremseinrichtungen einer pneumatischen oder hydraulischen Bremsvorrichtung mit einem gemeinsamen Bremsdruck versorgt werden. Ein solcher gemeinsamer Bremsdruck kann beispielsweise durch eine vorgeschaltete Hauptsteuerventileinrichtung bereitgestellt werden, welche durch eine elektronische Bremssteuereinrichtung ansteuerbar sein kann. Es ist vorstellbar, dass einzelne Reibbremseinrichtungen über Vorrichtungen verfügen, über die von einer gemeinsamen Hauptsteuerventileinrichtung bereitgestellter Druck individuell modifizierbar ist. Dazu können beispielsweise geeignete Ventile wie Ablassventile vorgesehen sein, die jeweils einzelnen Reibbremseinrichtungen zugeordnet sein können und die beispielsweise durch eine Bremssteuereinrichtung ansteuerbar sein können. Über derartige Ablassventile kann jeweils der einem Krafterzeuger durch die Hauptsteuerventileinrichtung bereitgestellte Bremsdruck individuell eingestellt und insbesondere verringert werden. Allgemein kann Sensorik zur Erfassung von Betriebsparametern des Fahrzeugs vorgesehen sein, die zu einer Steuereinrichtung gehören oder separat davon ausgebildet sein kann. Eine entsprechende Sensorik kann beispielsweise Bremsdrucksensoren und/oder Raddrehzahlsensoren und/oder Bremskraftsensoren und/oder Bremsmomentsensoren und/oder andere Sensoren umfassen, die zur Datenübertragung mit der Steuereinrichtung verbunden oder verbindbar sind. Eine Steuereinrichtung kann eine Bremsregelungseinrichtung sein.

Erfindungsgemäß ist eine Bremsregelungseinrichtung für ein Schienenfahrzeug vorgesehen, die zur Steuerung mindestens einer ersten Bremseinrichtung und einer zweiten Bremseinrichtung verbunden oder verbindbar ist. Die erste Bremseinrichtung ist zum Bremsen mindestens eines ersten Rades des Schienenfahrzeugs ausgebildet und die zweite Bremseinrichtung ist zum Bremsen mindestens eines zweiten Rades ausgebildet, wobei das erste Rad und das zweite Rad es vermögen, sich unabhängig voneinander zu drehen. Ferner ist die Bremsregelungseinrichtung dazu ausgebildet, die erste Bremseinrichtung und die zweite Bremseinrichtung unabhängig voneinander zu regeln. Die Bremsregelungseinrichtung ist außerdem dazu ausgebildet, einen Ist-Schlupf des ersten Rades und einen Ist-Schlupf des zweiten Rades zu ermitteln und/oder zu erfassen, wobei die Bremsregelungseinrichtung ferner dazu ausgebildet ist, durch Ansteuerung der ersten Bremseinrichtung das erste Rad in einen vorbestimmten ersten Schlupf-Sollwertbereich zu regeln und durch Ansteuerung der zweiten Bremseinrichtung das zweite Rad in einen vorbestimmten zweiten Schlupf-Sollwertbereich zu regeln, der sich von dem ersten Schlupf-Sollwertbereich unterscheidet. Somit wird erreicht, dass unabhängig voneinander drehende Räder in unterschiedlichen Schlupfbereichen gebremst werden. Dadurch wird das Risiko vermindert, dass aufgrund einer falschen Annahme über eine herrschende Adhäsionsbeiwert-Radschlupf-Funktion die unabhängig voneinander drehenden Räder gleichzeitig ineffizient oder falsch gebremst werden. Dies erhöht insgesamt die Sicherheit bei der Bremsung, da zumindest ein Teil der Räder in einem effizienten Adhäsionsbeiwertbereich gebremst werden. Die Regelung in unterschiedliche Schlupf-Sollwertbereiche kann insbesondere dann zweckmäßig sein, wenn ein tatsächlicher Zusammenhang zwischen Radschlupf und Kraftschlussbeiwert nicht oder noch nicht bekannt ist. Der erste Schlupf-Sollwertbereich kann niedrigere Schlupfwerte umfassen als der zweite Schlupf-Sollwertbereich. Die Bremsregelungseinrichtung kann insbesondere dazu ausgebildet sein, bei Beginn eines Bremsvorgangs das erste Rad in den ersten Schlupf-Sollwertbereich zu regeln und das zweite Rad in den zweiten Schlupf-Sollwertbereich. Die Bremsregelungseinrichtung kann insbesondere eine elektronische Bremsregelungseinrichtung sein, etwa ein Bremsrechner. Die Bremsregelungseinrichtung kann dazu ausgebildet sein, unterschiedliche Bremsdrücke und/oder Bremsströme und/oder Bremskräfte und/oder Bremsmomente für die erste und die zweite Bremseinrichtung anzusteuern, um diese unabhängig voneinander zu regeln. Die erste Bremseinrichtung kann jede Art von zum Bremsen eines Rades geeigneter Bremsvorrichtung aufweisen, insbesondere eine pneumatische Bremsvorrichtung. Es ist vorstellbar, dass die zweite Bremseinrichtung eine entsprechende Bremsvorrichtung aufweist, die insbesondere ebenfalls eine pneumatische Bremsvorrichtung sein kann. Es kann eine durch die Bremsregelungseinrichtung ansteuerbare gemeinsame Hauptsteuerventileinrichtung zum Bereitstellen eines Hauptbremsdrucks für die erste Bremseinrichtung und die zweite Bremseinrichtung vorgesehen sein, sollten diese hydraulische oder pneumatische Bremsvorrichtungen aufweisen. Es können eine oder mehrere Stromquellen zur Versorgung der ersten Bremseinrichtung und der zweiten Bremseinrichtung mit elektrischem Bremsstrom vorgesehen sein, sollten diese elektrische oder elektromechanische Bremsvorrichtungen aufweisen. Die Bremsregelungseinrichtung kann dazu ausgebildet sein, die Versorgung der ersten Bremseinrichtung und der zweiten Bremseinrichtung mit einem Bremsstrom zu steuern oder zu regeln. Es ist vorstellbar, dass der ersten Bremseinrichtung und der zweiten Bremseinrichtung jeweils eine eigene durch die Bremsregelungseinrichtung ansteuerbare Steuerventileinrichtung zum Bereitstellen und/oder Modifizieren eines Bremsdrucks zugeordnet ist. Die erste Bremseinrichtung und/oder die zweite Bremseinrichtung können jeweils Ventile zur individuellen Ansteuerung ihnen zugeordneter Reibbremseinrichtungen aufweisen, insbesondere zur Versorgung zugeordneter Krafterzeuger mit einem Bremsdruck übertragenden Medium, etwa Druckluft. Eine Bremseinrichtung kann allgemein eine oder mehrere Reibbremseinrichtungen aufweisen. Ventile zur individuellen Ansteuerung können beispielsweise Ablassventile sein, über die ein für eine oder mehrere Reibbremseinrichtungen der ersten Bremseinrichtung und/oder der zweiten Bremseinrichtung vorgesehener Bremsdruck individuell angesteuert werden kann. Ablassventile können Teil einer Gleitschutzeinrichtung sein, die dazu vorgesehen ist, in dem Fall, dass ein Blockieren eines Rades eintritt oder droht, den zugeführten Bremsdruck zu verringern. Die Bremsregelungseinrichtung kann zur Ansteuerung der einzelnen Steuerventileinrichtungen ausgebildet sein. Das erste Rad kann unabhängig vom zweiten Rad aufgehängt sein, beispielsweise durch individuelle Einzelradaufhängungen. Es ist auch vorstellbar, dass das erste Rad und das zweite Rad jeweils auf unterschiedlichen Radachsen sitzen. Eine Radachse kann insbesondere zwei Räder starr miteinander verbinden. Es ist vorstellbar, dass die erste Bremseinrichtung zum Bremsen der Räder an einer oder mehreren Achsen geeignet ist und die zweite Bremseinrichtung zum Bremsen der Räder an einer oder mehreren anderen Achsen geeignet ist. Es ist auch vorstellbar, dass mehr als zwei Bremseinrichtungen vorgesehen sind, die jeweils mindestens ein unabhängig von anderen Rädern drehbares Rad oder eine unabhängig von anderen Achsen drehbare Achse zu bremsen vermögen. Es kann zweckmäßig sein, einzeln aufgehängte Räder oder Achsen in zwei oder mehr Gruppen zu unterteilen, die jeweils durch die Bremsregelungseinrichtung in unterschiedliche Schlupf-Sollwertbereiche geregelt werden. Jeder Gruppe kann mindestens ein Rad und/oder eine Achse zugeordnet sein. Es kann etwa vorgesehen sein, dass mindestens drei unabhängig voneinander drehbare Räder oder Achsen mit jeweils zugeordneten Bremseinrichtungen wie beispielsweise einer Reibbremseinrichtung in drei Gruppen jeweils in einen ersten Schlupf-Sollwertbereich, einen zweiten Schlupf-Sollwertbereich und einen dritten Schlupf-Sollwertbereich geregelt werden, die sich jeweils voneinander unterscheiden. Eine Bremseinrichtung kann insbesondere mindestens eine Reibbremseinrichtung mit einem zugeordneten Krafterzeuger aufweisen, der beispielsweise pneumatisch, hydraulisch oder elektrisch betätigbar sein kann. Die Bremsregelungseinrichtung kann dazu geeignet sein, die erste Bremseinrichtung und die zweite Bremseinrichtung unabhängig voneinander zu regeln, indem sie dazu ausgebildet ist, Krafterzeuger der Bremseinrichtungen jeweils derart anzusteuern, dass sie unterschiedliche Bremskräfte bereitzustellen vermögen. Dazu können beispielsweise unterschiedliche Bremsdrücke an als Krafterzeuger wirkende pneumatische oder hydraulische Zylinder anlegbar sein. Es ist vorstellbar, dass elektrisch betätigbare Krafterzeuger nach Maßgabe der Bremsregelungseinrichtung mit unterschiedlichen Bremsströmen versorgbar sind. Zweckmäßig ist die Bremsregelungseinrichtung dazu ausgebildet, einen vorbestimmten Schlupf-Sollwertbereich basierend auf einem zugeordneten Ist-Schlupfes des zu bremsenden Rades anzusteuern beziehungsweise zu regeln. Das Ermitteln und/oder Erfassen eines Ist-Schlupfes eines Rades kann das Empfangen von Signalen von Sensoren oder zur Übertragen von Daten verbundenen Steuereinrichtungen umfassen, die einen Ist-Schlupf angeben oder auf deren Basis durch die Bremsregelungseinrichtung ein Ist-Schlupf ermittelbar ist. Beispielsweise kann die Bremsregelungseinrichtung mit einem oder mehreren Sensoren zur Bestimmung einer Raddrehzahl eines Rades, insbesondere des ersten Rades und/oder des zweiten Rades und einem Fahrtgeschwindigkeitssensor verbunden sein. Es ist auch vorstellbar, dass die Fahrtgeschwindigkeit des Schienenfahrzeugs basierend auf Daten von Raddrehzahlsensoren bestimmt wird. Ferner kann die Bremsregelungseinrichtung mit einem Bremsmomentensensor verbunden oder verbindbar sein, die ein auf ein Rad oder eine Achse übertragenes Bremsmoment bei der Bremsung ermitteln. Die Ansteuerung der ersten Bremseinrichtung und/oder weiterer Bremseinrichtungen kann insbesondere unabhängig von tatsächlichen Kraftschlussbedingungen erfolgen. Vorbestimmte Schlupf-Sollwertbereiche können beispielsweise in einem Speicher der Bremsregelungseinrichtung hinterlegt sein und insbesondere unabhängig von vorliegenden Bedingungen abgerufen und eingestellt werden. Allgemein kann vorgesehen sein, dass der erste Schlupf-Sollwertbereich und der zweite Schlupf-Sollwertbereich und/oder gegebenenfalls weitere Schlupf-Sollwertbereiche sich nicht überlagern, also voneinander disjunkt sind. Das Regeln eines Rades in einen Schlupf-Sollwertbereich kann bedeuten, dass die zugeordnete Bremseinrichtung derart angesteuert wird, dass der Schlupf des Rades in den Schlupf-Sollwertbereich getrieben wird und sich das Rad während des Regelns im Wesentlichen in diesem Schlupf-Sollwertbereich befindet. Das Regeln eines Rades in einen vorbestimmten Schlupf-Sollwertbereich kann insbesondere eine Ansteuerung einer zugeordneten Bremseinrichtung durch die Bremsregelungseinrichtung bedeuten, um den zur Bremsung des Rades bereitgestellten Bremsdruck und/oder die ausgeübte Bremskraft und/oder das ausgeübte Bremsmoment auf das Rad derart einzustellen, dass der Schlupf des Rades im vorgesehenen Schlupf-Sollwertbereich gehalten wird beziehungsweise in diesen Schlupf-Sollwertbereich getrieben wird. Dies kann etwa durch Ansteuern einer Hauptsteuerventileinrichtung bereitgestellten Bremsdrucks und/oder individuelles Einstellen eines Bremsdrucks bei einem pneumatischen Zylinder einer Reibbremseinrichtung durch die Bremsregelungseinrichtung durchgeführt werden. Ein Schlupf-Sollwertbereich kann einen einzelnen Schlupf-Sollwert aufweisen, und/oder durch zwei Grenzsollwerte begrenzt sein. Insbesondere kann ein Schlupf-Sollwertbereich durch einen einzelnen vorgegebenen Wert repräsentiert sein, der im Wesentlichen dem Zielwert eines einzustellenden Schlupfes entspricht. Grenzsollwerte eines Sollwertbereichs können maximal zulässige Abweichungen von einem solchen Zielwert definieren. Es ist vorstellbar, dass die Bremsregelungseinrichtung dazu ausgebildet ist, die beschriebene asymmetrische Bremsung in verschiedenen Schlupfbereichen während eines Bremsvorgangs konstant beizubehalten und/oder die erste und die zweite Bremseinrichtung entsprechend anzusteuern. Es ist auch vorstellbar, dass die Bremsregelungseinrichtung dazu ausgebildet ist, ausgehend von einer derartigen asymmetrischen Bremsung den Radschlupf der Räder und/oder die ausgeübte Bremskraft oder das Bremsmoment und/oder den ausgeübten Bremsdruck während des Bremsvorgangs an die Adhäsionsverhältnisse anzupassen. Dazu kann vorgesehen sein, dass die Bremsregelungseinrichtung zum Empfang von Bremsdaten ausgebildet ist, welche jeweils einen Bremsdruck und/oder eine Bremskraft und/oder ein Bremsmoment der ersten oder zweiten Bremseinrichtung betreffen. Es ist vorstellbar, dass die Bremsregelungseinrichtung es vermag, die erste Bremseinrichtung und die zweite Bremseinrichtung basierend auf derartigen Bremsdaten anzusteuern.

Der erste Schlupf-Sollwertbereich bietet bei vorbestimmten ersten Bedingungen einen hohen Kraftschluss zwischen Rad und Schiene, und der zweite Schlupf-Sollwertbereich bietet bei vorbestimmten zweiten Bedingungen einen hohen Kraftschluss zwischen Rad und Schiene. Es kann davon ausgegangen werden, dass sich die vorbestimmten ersten Bedingungen von den vorbestimmten zweiten Bedingungen unterscheiden. Die ersten und zweiten Bedingungen können jeweils durch einen den Bedingungen zugeordneten Zusammenhang zwischen Radschlupf und Adhäsionsbeiwert repräsentiert sein. Die Bedingungen können sich insbesondere auf äußere Bedingungen wie das Vorhandensein einer bestimmten Art von Zwischenschicht zwischen Rad und Schiene beziehen. Eine solche Zwischenschicht kann insbesondere eine wässrige oder wässrig-seifige Zwischenschicht oder eine Zwischenschicht aus Laub und/oder anderem Material bezeichnen. Dabei wird angenommen, dass bei einer vorbestimmten Bedingung ein vorbestimmter funktionaler Zusammenhang zwischen Kraftschluss oder Adhäsionsbeiwert und Radschlupf besteht, der insbesondere ein oder mehrere Maxima oder einen optimalen Bereich aufweisen kann. Insbesondere kann ein hoher Kraftschluss im Bereich eines relativen Maximums oder eines absoluten Maximums einer Adhäsionsbeiwert-Radschlupf-Kurve liegen. Entsprechend kann ein Schlupf-Sollwertbereich derart definiert sein, dass er ein relatives oder absolutes Maximum einer bestimmten Adhäsionsbeiwert-Radschlupfkurve enthält. Es kann angenommen werden, dass der erste Schlupf-Sollwertbereich bei einer wässrigen Zwischenschicht einen hohen Kraftfluss zwischen Rad und Schiene bietet, und der zweite Schlupf-Sollwertbereich bei einer nicht wässrigen Zwischenschicht einen hohen Kraftschluss zwischen Rad und Schiene bietet. Insbesondere kann der erste Schlupf-Sollwertbereich bei oder um 5% Radschlupf liegen, etwa bei 5% ±2%. Der zweite Schlupf-Sollwertbereich kann bei oder um 30% Radschlupf liegen, etwa bei 30% ± 5%, 30% ± 3% oder 30% ± 2%.

Es ist vorstellbar, dass die Bremsregelungseinrichtung dazu ausgebildet ist, nach Regelung des ersten Rades in den ersten Schlupf-Sollwertbereich und des zweiten Rades in den zweiten Schlupf-Sollwertbereich durch Ansteuerung der ersten Bremseinrichtung und der zweiten Bremseinrichtung das erste Rad und das zweite Rad in einen gemeinsamen Schlupf-Sollwertbereich zu regeln. Der gemeinsame Schlupf-Sollwertbereich weist vorzugsweise gegenüber dem ersten Schlupf-Sollwertbereich und/oder dem zweiten Schlupf-Sollwertbereich einen höheren Kraftschluss auf. Der gemeinsame Schlupf-Sollwertbereich kann der erste Schlupf-Sollwertbereich sein, der zweite Schlupf-Sollwertbereich oder ein weiterer Schlupf-Sollwertbereich, der sich vom ersten Schlupf-Sollwertbereich und vom zweiten Schlupf-Sollwertbereich unterscheidet. Dabei kann vorgesehen sein, dass ein gemeinsamer Schlupf-Sollwertbereich sich zumindest teilweise mit dem ersten, zweiten oder weiteren Schlupf-Sollwertbereichen überlagert. Eine Regelung in einen gemeinsamen Schlupf-Sollwertbereich entspricht damit dem Zustand, in dem das erste und das zweite Rad für eine Bremsung bei gleichem Radschlupf angesteuert werden.

Zweckmäßigerweise kann die Bremsregelungseinrichtung dazu ausgebildet sein, den gemeinsamen Schlupf-Sollwertbereich basierend auf einem Bremsverhalten des ersten Rades und/oder des zweiten Rades zu ermitteln. Insbesondere ist es vorstellbar, während einer Bremsung Rückschlüsse auf eine tatsächlich geltende Adhäsionsbeiwert-Radschlupf-Funktion zu ziehen, und basierend vom ersten Schlupf-Sollwertbereich und vom Schlupf-Sollwertbereich als Ausgangssollwertbereiche die Räder dann in einen tatsächlich für alle Räder möglichst günstigen Schlupf-Sollwertbereich zu regeln. Damit wird einerseits sichergestellt, dass bei Beginn einer Bremsung zumindest ein Teil der Räder in einem akzeptablen Schlupf-Sollwertbereich bremsen. Andererseits wird im Verlauf der Bremsung basierend auf aktuellen Daten eine zunehmend bessere Bremsung möglich. Durch die asymmetrische Bremsung der Räder bei Beginn des Bremsvorgangs wird somit ein stabileres Suchen oder Bestimmen einer tatsächlich geltenden Adhäsionsbeiwert-Radschlupf-Funktion ermöglicht. Das Ermitteln eines Bremsverhaltens eines Rades beziehungsweise einer Achse, auf welcher ein Rad angeordnet ist, kann insbesondere basierend auf Daten von einem Raddrehzahlsensor, einem Sensor zur Erfassung einer ausgeübten Bremskraft und/oder eines Bremsmoments und/oder einer gemessenen Fahrtgeschwindigkeit durchgeführt werden.

Es kann zweckmäßig sein, dass die Bremsregelungseinrichtung dazu ausgebildet ist, durch Ansteuerung der ersten Bremseinrichtung das erste Rad von einem gemeinsamen Schlupf-Sollwertbereich in den ersten Schlupf-Sollwertbereich zu regeln und/oder durch Ansteuerung der zweiten Bremseinrichtung das zweite Rad von dem gemeinsamen Schlupf-Sollwertbereich in den zweiten Schlupf-Sollwertbereich zu regeln. Somit kann insbesondere bei einem längeren Bremsvorgang von dem gemeinsamen Schlupf-Sollwertbereich in den Ausgangszustand gewechselt werden, um ein erneutes Überprüfen oder Ermitteln eines zweckmäßigen gemeinsamen Schlupf-Sollwertbereichs zu erleichtern. Dadurch wird es möglich, zu verhindern, dass ein fälschlich als optimal angenommener gemeinsamer Schlupf-Sollwertbereich beibehalten wird und die Bremsung ineffizient durchgeführt wird. Somit kann beispielsweise für den Fall, dass sich die Bedingungen für den Rad-Schiene-Kontakt während der Bremsung stark ändern, ein nicht mehr gültiger gemeinsamer Schlupf-Sollwertbereich korrigiert werden. Es kann vorgesehen sein, regelmäßig zwischen den Brems-Sollwertbereichen zu wechseln. Die Bremsregelungseinrichtung kann dazu ausgebildet sein, ein Rad jeweils abwechselnd für eine Bremsung im ersten oder zweiten Schlupf-Sollwertbereich und dem gemeinsamen Sollwertbereich anzusteuern.

Die Bremseinrichtung kann dazu ausgebildet sein, durch Ansteuerung der ersten Bremseinrichtung das erste Rad von dem gemeinsamen Schlupf-Sollwertbereich in den zweiten Schlupf-Sollwertbereich zu regeln und/oder durch Ansteuerung der zweiten Bremseinrichtung das zweite Rad von dem gemeinsamen Schlupf-Sollwertbereich in den ersten Schlupf-Sollwertbereich zu regeln. Somit werden beim Zurückkehren vom gemeinsamen Schlupf-Sollwertbereich die Rollen des ersten Rades und des zweiten Rades beziehungsweise der zugeordneten Achsen vertauscht, so dass das erste Rad in den zweiten Schlupf-Sollwertbereich geregelt wird und/oder das zweite Rad in den ersten Schlupf-Sollwertbereich geregelt wird. Dies ermöglicht es, systematische Fehler bei der Bestimmung eines gemeinsamen Schlupf-Sollwertbereichs zu verringern und eine gleichmäßigere Belastung der Räder während der Bremsung zu erreichen. Es kann vorgesehen sein, dass in regelmäßigen zeitlichen Abständen oder abhängig von einer zurückgelegten Wegstrecke abwechselnd zwischen einer Regelung in den ersten und/oder zweiten Schlupf-Sollwertbereich und einem gemeinsamen Schlupf-Sollwertbereich gewechselt wird. Bei jedem Wechsel kann der gemeinsame Schlupf-Sollwertbereich sich ändern. Insbesondere kann vorgesehen sein, dass das erste Rad nach einer Regelung in den gemeinsamen Schlupf-Sollwertbereich jeweils abwechselnd in den ersten Schlupf-Sollwertbereich und in den zweiten Schlupf-Sollwertbereich geregelt wird.

Der erste Schlupf-Sollwertbereich bietet bei einer wässrigen Zwischenschicht zwischen Rad und Schiene einen hohen Kraftschluss und der zweite Schlupf-Sollwertbereich bietet bei einer nicht-wässrigen Zwischenschicht einen hohen Kraftschluss. Damit kann der Tatsache Rechnung getragen werden, dass die Verläufe von Adhäsionsbeiwert-Radschlupf-Funktionen bei wässrigen Zwischenschichten sich deutlich von dem Verlauf der Funktion bei nicht-wässrigen Zwischenschichten unterscheidet.

Die Erfindung betrifft auch eine Bremsanlage für ein Schienenfahrzeug mit einer hierin beschriebenen Bremsanlage. Die Bremsanlage kann insbesondere die erste Bremseinrichtung und die zweite Bremseinrichtung aufweisen. Es ist vorstellbar, dass die Bremsanlage ferner weitere Bremseinrichtungen aufweist. Die Bremsanlage kann einen oder mehrere der hierin beschriebenen Sensoreneinrichtungen oder Sensoren umfassen.

Die Erfindung betrifft außerdem ein Schienenfahrzeug mit einer hierin beschriebenen Bremsregelungseinrichtung und/oder einer hierin beschriebenen Bremsanlage.

Die Erfindung betrifft außerdem ein Verfahren zur Regelung einer Bremsanlage eines Schienenfahrzeugs mit den Schritten des Erfassens und/oder Ermittelns eines Ist-Schlupfes eines ersten Rades und eines Ist-Schlupfes eines zweiten Rades, wobei das erste Rad und das zweite Rad es vermögen, sich unabhängig voneinander zu drehen, und des Ansteuerns einer ersten Bremseinrichtung der Bremsanlage, um das erste Rad in einen ersten Schlupf-Sollwertbereich zu regeln und einer zweiten Bremseinrichtung der Bremsanlage, um das zweite Rad in einen Schlupf-Sollwertbereich zu regeln, der sich von dem ersten Schlupf-Sollwertbereich unterscheidet. Das Verfahren kann durch eine hierin beschriebene Bremsregelungseinrichtung durchgeführt oder angesteuert werden. Insbesondere kann die Bremsregelungseinrichtung dazu ausgebildet sein, das Ansteuern der Bremseinrichtungen durchzuführen. Die Bremsanlage kann eine hierin beschriebene Bremsanlage sein. Nach Regelung in den ersten Schlupf-Sollwertbereich und in den zweiten Schlupf-Sollwertbereich durch Ansteuerung der ersten Bremseinrichtung und der zweiten Bremseinrichtung können das erste Rad und das zweite Rad in einen gemeinsamen Schlupf-Sollwertbereich geregelt werden. Es ist vorstellbar, den gemeinsamen Schlupf-Sollwertbereich basierend auf einem Bremsverhalten des ersten Rades und/oder des zweiten Rades zu ermitteln. Das erste Rad kann durch Ansteuerung der ersten Bremseinrichtung von dem gemeinsamen Schlupf-Sollwertbereich in den ersten Schlupf-Sollwertbereich geregelt werden. Ferner kann zusätzlich oder alternativ das zweite Rad durch Ansteuerung der zweiten Bremseinrichtung von dem gemeinsamen Schlupf-Sollwertbereich in den zweiten Schlupf-Sollwertbereich geregelt werden. Es ist auch vorstellbar, abwechselnd dazu oder alternativ dazu durch Ansteuerung der ersten Bremseinrichtung das erste Rad von dem gemeinsamen Schlupf-Sollwertbereich in den zweiten Schlupf-Sollwertbereich zu regeln und/oder durch Ansteuerung der zweiten Bremseinrichtung das zweite Rad von dem gemeinsamen Schlupf-Sollwertbereich in den ersten Schlupf-Sollwertbereich zu regeln.

Die Erfindung wird nun mit Bezug auf die begleitenden Zeichnungen anhand bevorzugter Ausführungsformen beispielhaft erläutert.

Es zeigen:

Figur 1    eine beispielhafte Verteilung von Radschlupf
           für ein Schienenfahr-zeug; und

Figur 2    ein Beispiel für eine Bremsregelungseinrichtung.

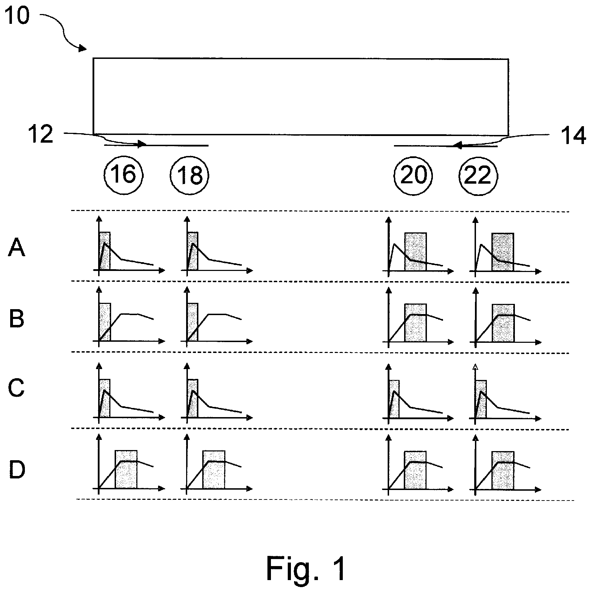

Figur 1 zeigt eine schematische Darstellung einer Verteilung von Radschlupf für ein Schienenfahrzeug
10, das in diesem Beispiel ein erstes Drehgestell 12 und
ein zweites Drehgestell 14 umfasst. Das Drehgestell 12
weist einen ersten Radsatz 16 und einen zweiten Radsatz 18 auf. Das zweite Drehgestell 14 weist einen dritten
Radsatz 20 und einen vierten Radsatz 22 auf. Die Radsätze weisen jeweils Räder auf, die durch eine gemeinsame Achse miteinander verbunden sind. Somit können
die Räder eines Radsatzes sich nicht unabhängig voneinander drehen, die Räder unterschiedlicher Radsätze
sind allerdings unabhängig voneinander drehbar. Unterhalb der schematischen Darstellung des Schienenfahrzeugs 10 sind unterschiedliche Verteilungen von
Schlupf-Sollwertbereichen gezeigt, die den einzelnen
Radsätzen zugeordnet sind. In den Zeilen A, B, C und D
sind jeweils jedem Radsatz zugeordnete Adhäsionsbeiwert-Radschlupf-Funktionen dargestellt. Dabei ist der
Adhäsionsbeiwert über dem Radschlupf schematisch
dargestellt. Innerhalb einer Zeile gelten für die verschiedenen Radsätze gleiche Bedingungen, so dass einander
entsprechende Kurvenverläufe dargestellt sind. Grau unterlegt dargestellt sind jeweils den einzelnen Radsätzen
zugeordnete Schlupf-Sollwertbereiche, in welche die jeweiligen Radsätze geregelt werden. In Zeilen A und B
sind jeweils die Anfangsverteilungen der Schlupf-Sollwertbereiche zu Beginn einer Bremsung dargestellt, um
bei unterschiedlichem Kurvenverlauf die Wirkung der
vorgesehenen asymmetrischen Schlupfregelung darzustellen. Insbesondere sind in Zeilen A und B die Radsätze
16 und 18 in einen niedrigen Schlupf-Sollwertbereich geregelt, der bei einigen Prozent liegen kann. Die Radsätze
20 und 22 sind in einen höheren zweiten Schlupf-Sollwertbereich geregelt, der um etwa 30% liegen kann. Der
erste Schlupf-Sollwertbereich und der zweite Schlupf-
Sollwertbereich überschneiden sich nicht. Im Beispiel
der Zeile A liegt eine Adhäsionsbeiwert-Radschlupf-
Funktion vor, die ein starkes Maximum bei einem niedrigen Radschlupf hat, und danach deutlich abfällt. Durch
die vorgesehene asymmetrische Verteilung deckt der
erste Schlupf-Sollwertbereich, in den die Radsätze 16
und 18 geregelt sind, das Maximum des Adhäsionsbeiwerts ab, so dass diese Radsätze bei einem hohen Kraftschluss gebremst werden. Die Radsätze 20 und 22 werden in den zweiten Schlupf-Sollwertbereich geregelt, bei
dem ein niedriger Kraftschluss vorhanden ist, so dass
diese Räder nicht optimal effizient gebremst werden. Allerdings ist sichergestellt, dass die Hälfte der Räder in
einem Bereich mit hohem Kraftschluss gebremst werden, wodurch eine sichere Bremsung erfolgt. In der Zeile
B liegt bei gleicher anfänglicher Verteilung der Schlupf-
Sollwertbereiche eine andere Art der Zwischenschicht
zwischen Rad und Schiene vor. In diesem Beispiel liegt
ein relativ flacher Maximalbereich des Adhäsionsbeiwerts bei deutlich höheren Radschlupfwerten als in Beispiel A gezeigt vor. Bei niedrigen Radschlupfwerten liegt
ein sehr niedriger Adhäsionsbeiwert vor. Durch die vorgesehene Verteilung der Schlupf-Sollwertbereiche werden in diesem Beispiel der dritte Radsatz 20 und der
vierte Radsatz 22 in einen Schlupf-Sollwertbereich geregelt, der einen hohen Kraftschluss bietet, wodurch diese Radsätze effizient gebremst werden können. Die
Bremsung des ersten Radsatzes 16 und des zweiten
Radsatzes 18 erfolgt allerdings bei deutlich schlechterem Kraftschluss. Auch in diesem Beispiel stellt die Wahl
der Schlupf-Sollwertbereiche bei Beginn der Bremsung
sicher, dass auf jeden Fall ein Teil beziehungsweise die
Hälfte der Räder beziehungsweise Radsätze bei hohem
Kraftschluss gebremst werden. Würden wie üblich alle
Räder in den gleichen Radschlupfbereich geregelt, könnte insbesondere bei einer anfänglichen Bremsung der
Fall auftreten, dass alle Räder bei einem sehr niedrigen
Kraftschluss gebremst werden, wodurch eine ineffiziente
Bremsung insbesondere am Anfang erfolgen könnte. In
der Zeile C ist ein Zustand nach dem anfänglichen Einstellen der unterschiedlichen Schlupf-Sollwertbereiche
gezeigt. Während der Bremsung wird ermittelt, in welchem der vorgegebenen Schlupf-Sollwertbereiche eine
effizientere Bremsung erfolgt. Dies kann beispielsweise
durch Kommunikation mit einem Gleitschutzrechner erfolgen. Im Beispiel der Zeile C wurde festgestellt, dass
der erste Schlupf-Sollwertbereich eine effizientere Bremsung ermöglicht, so dass auch die zweite Gruppe von
Rädern mit den Radsätzen 20 und 22 in den ersten
Schlupf-Sollwertbereich geregelt werden. Somit ergibt
sich ein gemeinsamer Schlupf-Sollwertbereich, der in
diesem Beispiel dem ersten Schlupf-Sollwertbereich entspricht. In der Zeile D ist das entgegengesetzte Beispiel
gezeigt, in welchem nach der anfänglichen Schlupf-Sollwertverteilung der erste Radsatz 16 und der zweite Radsatz 18 ebenfalls in den effizienteren, zweiten Schlupf-
Sollwertbereich geregelt werden, so dass nun alle Radsätze bei einem hohen Kraftschluss gebremst werden.
Es kann vorgesehen sein, dass die Radsätze von einer
Verteilung, in welcher alle Radsätze in einen gemeinsamen Schlupf-Sollwertbereich geregelt werden, in eine
asymmetrische Verteilung der in den einzelnen Radsätzen zugeordneten Schlupf-Sollwertbereiche geregelt
wird. Beispielsweise kann von Zeile C oder D in den Zustand A oder B gewechselt werden. Es kann abwechselnd von einem gemeinsamen Schlupf-Sollwertbereich
in eine asymmetrische Schlupf-Sollwertverteilung geregelt werden. Dabei ist vorstellbar, dass der erste und der
zweite Radsatz 16, 18 abwechselnd von dem gemeinsamen Schlupf-Sollwertbereich in den ersten und den
zweiten Schlupf-Sollwertbereich geregelt werden und
der dritte und vierte Radsatz 20 und 22 abwechselnd von dem gemeinsamen Schlupf-Sollwertbereich in den zweiten und ersten Schlupf-Sollwertbereich. Es ist selbstverständlich vorstellbar, dass während einer Fahrt sich die Schlupfbedingungen derart ändern, dass der gemeinsame Schlupf-Sollwertbereich sich ändert. Insbesondere kann vorgesehen sein, dass der gemeinsame Schlupf-Sollwertbereich sich sowohl vom ersten Schlupf-Sollwertbereich als auch vom zweiten Schlupf-Sollwertbereich unterscheidet.

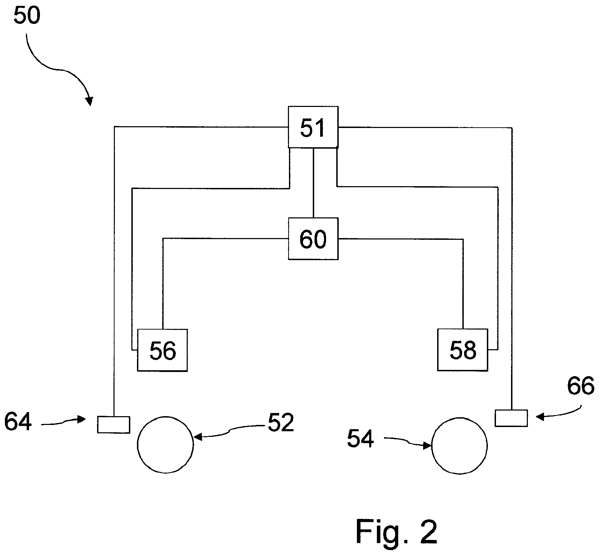

Figur 2 zeigt schematisch eine Bremsanlage 50 mit einer Bremsregelungseinrichtung 51. Die Bremsanlage 50 ist dazu vorgesehen, ein erstes Rad 52 und ein zweites Rad 54 zu bremsen. Dazu ist dem ersten Rad 52 eine erste Bremseinrichtung 56 der Bremsanlage 50 zugeordnet. Dem zweiten Rad 54 ist eine zweite Bremseinrichtung 58 zugeordnet. In diesem Beispiel ist die Bremsanlage 50 als pneumatische Bremsanlage ausgebildet. Eine Hauptsteuerventileinrichtung 60 ist mit der Bremsregelungseinrichtung 51 verbunden. Die Bremsregelungseinrichtung 51 ist dazu vorgesehen, die Hauptsteuereinrichtung 60 zum Bereitstellen eines gemeinsamen Bremsdrucks für die erste Bremseinrichtung 56 und die zweite Bremseinrichtung 58 anzusteuern. Ferner verfügt die erste Bremseinrichtung 56 über eine Bremsventilanordnung, welche über die Bremsregelungseinrichtung 51 ansteuerbar ist und welche den von der Hauptsteuerventileinrichtung 60 bereitgestellten Bremsdruck nach Maßgabe der Bremsregelungseinrichtung 51 zu modifizieren vermag. Der von der Bremsventilanordnung modifizierte Bremsdruck wird an einen als Krafterzeuger dienenden pneumatischen Zylinder der ersten Bremseinrichtung 56 angelegt, um eine Reibbremseinrichtung zu betätigen, in diesem Beispiel eine nicht näher gezeigte Klotzbremse. Dadurch kann durch die Bremsregelungseinrichtung 51 ein gewünschter Bremsdruck zum Bremsen des ersten Rades 52 angesteuert werden. Ein erster Raddrehzahlmesser 64 ist dazu vorgesehen, die Raddrehzahl des ersten Rades 52 zu messen und über eine geeignete Verbindung der Bremsregelungseinrichtung 51 ein entsprechendes Signal zuzuführen. Die zweite Bremseinrichtung 58 ist zum Bremsen des zweiten Rades 54 in analoger Weise ausgebildet. Die zweite Bremseinrichtung kann nach Maßgabe der Bremsregelungseinrichtung 51 durch Ansteuerung der zugeordneten Bremsventileinrichtung einen Bremsdruck zur Betätigung des zugeordneten pneumatischen Zylinders bereitstellen, der unabhängig vom zur Betätigung der ersten Bremseinrichtung wirksamen Bremsdruck ist. Ein zweiter Raddrehzahlsensor 66 ist zum Ermitteln der Raddrehzahl des zweiten Rades 54 vorgesehen und über eine Datenübertragungsverbindung mit der Bremsregelungseinrichtung 51 verbunden. Im Betrieb erfasst die Bremsregelungseinrichtung 51 über die Raddrehzahlsensoren 64 und 66 entsprechende Drehzahldaten der Räder 52, 54. Über eine nicht gezeigte Verbindung mit einem Geschwindigkeitssensor erfasst die Bremsregelungseinrichtung eine Fahrtgeschwindigkeit. Daraus ermittelt die Bremsregelungseinrichtung 51 den Ist-Radschlupf der einzelnen Räder. Basierend auf dem bekannten Ist-Schlupf der Räder steuert die Bremsregelungseinrichtung die erste Bremseinrichtung 56 und die zweite Bremseinrichtung 58 unabhängig voneinander derart an, dass die unabhängig voneinander drehbaren Räder 52 und 54 zumindest bei Beginn eines Bremsvorgangs in unterschiedliche Schlupf-Sollwertbereiche geregelt werden. Zur Regelung werden die Daten der Drehzahlsensoren verwendet. Die Bremsregelungseinrichtung 51 kann ferner mit einer Bremsdrucksensoreinrichtung verbunden sein, die einen an der Hauptsteuerventileinrichtung 60 anstehenden Hauptbremsdruck und/oder individuell bei den Bremseinrichtungen 56, 58 wirksame Bremsdrücke erfasst und an die Bremsregelungseinrichtung 51 übermittelt. Es kann auch vorgesehen sein, dass die Bremsregelungseinrichtung 51 eine Fahrtgeschwindigkeit aus Drehzahlen mehrerer Räder ermittelt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Bezugszeichenliste**

| | |
|---|---|
| 10 | Schienenfahrzeug |
| 12 | erstes Drehgestell |
| 14 | zweites Drehgestell |
| 16 | erster Radsatz |
| 18 | zweiter Radsatz |
| 20 | dritter Radsatz |
| 22 | vierter Radsatz |
| 50 | Bremsanlage |
| 51 | Bremsregelungseinrichtung |
| 52 | erstes Rad |
| 54 | zweites Rad |
| 56 | erste Bremseinrichtung |
| 58 | zweite Bremseinrichtung |
| 60 | Hauptsteuerventileinrichtung |
| 64 | erster Drehzahlsensor |
| 66 | zweiter Drehzahlsensor |

**Patentansprüche**

1. Bremsregelungseinrichtung (51) für ein Schienenfahrzeug (10), die zur Steuerung mindestens einer ersten Bremseinrichtung (56) und einer zweiten Bremseinrichtung (58) verbunden oder verbindbar ist;
wobei die erste Bremseinrichtung (56) zum Bremsen mindestens eines ersten Rades (52) des Schienenfahrzeugs (10) geeignet ist und die zweite Bremseinrichtung (58) zum Bremsen mindestens eines zweiten Rades (54) geeignet ist, wobei das erste Rad (52) und das zweite Rad (54) es vermögen, sich unabhängig voneinander zu drehen;
wobei die Bremsregelungseinrichtung (51) dazu geeignet ist, die erste Bremseinrichtung (56) und die zweite Bremseinrichtung (58) unabhängig voneinander zu regeln;
wobei die Bremsregelungseinrichtung (51) ferner dazu ausgebildet ist, einen Ist-Schlupf des ersten Rades (52) und einen Ist-Schlupf des zweiten Rades (54) zu ermitteln und/oder zu erfassen; und
wobei die Bremsregelungseinrichtung (51) dazu ausgebildet ist, durch Ansteuerung der ersten Bremseinrichtung (56) das erste Rad (52) in einen vorbestimmten ersten Schlupf-Sollwertbereich zu regeln, und durch Ansteuerung der zweiten Bremseinrichtung (58) das zweite Rad (54) in einen vorbestimmten zweiten Schlupf-Sollwertbereich zu regeln, der sich von dem ersten Schlupf-Sollwertbereich unterscheidet,
**dadurch gekennzeichnet,dass**
der erste Schlupf-Sollwertbereich bei vorbestimmten ersten Bedingungen einen hohen Kraftschluss zwischen Rad und Schiene bietet, und der zweite Schlupf-Sollwertbereich bei vorbestimmten zweiten Bedingungen einen hohen Kraftschluss zwischen Rad und Schiene bietet, wobei der erste Schlupf-Sollwertbereich bei einer wässrigen Zwischenschicht zwischen Rad und Schiene einen hohen Kraftschluss bietet und der zweite Schlupf-Sollwertbereich bei einer nicht-wässrigen Zwischenschicht einen hohen Kraftschluss bietet.

2. Bremsregelungseinrichtung nach Anspruch 1, wobei die Bremsregelungseinrichtung (51) dazu ausgebildet ist, nach Regelung des ersten Rades (52) in den ersten Schlupf-Sollwertbereich und des zweiten Rades (54) in den zweiten Schlupf-Sollwertbereich durch Ansteuerung der ersten Bremseinrichtung (56) und der zweiten Bremseinrichtung (58) das erste Rad (52) und das zweite Rad (54) in einen gemeinsamen Schlupf-Sollwertbereich zu regeln.

3. Bremsregelungseinrichtung nach Anspruch 2, wobei die Bremsregelungseinrichtung (51) dazu ausgebildet ist, den gemeinsamen Schlupf-Sollwertbereich basierend auf einem Bremsverhalten des ersten Rades (52) und/oder des zweiten Rades (54) zu ermitteln.

4. Bremsregelungseinrichtung nach Anspruch 2 oder 3, wobei die Bremseinrichtung dazu ausgebildet ist, durch Ansteuerung der ersten Bremseinrichtung (56) das erste Rad (52) von dem gemeinsamen Schlupf-Sollwertbereich in den ersten Schlupf-Sollwertbereich zu regeln und/oder durch Ansteuerung der zweiten Bremseinrichtung (58) das zweite Rad (54) vom dem gemeinsamen Schlupf-Sollwertbereich in den zweiten Schlupf-Sollwertbereich zu regeln.

5. Bremsregelungseinrichtung nach Anspruch 2, 3 oder 4, wobei die Bremseinrichtung dazu ausgebildet ist, durch Ansteuerung der ersten Bremseinrichtung (56) das erste Rad (52) von dem gemeinsamen Schlupf-Sollwertbereich in den zweiten Schlupf-Sollwertbereich zu regeln und/oder durch Ansteuerung der zweiten Bremseinrichtung (58) das zweite Rad (54) vom dem gemeinsamen Schlupf-Sollwertbereich in den ersten Schlupf-Sollwertbereich zu regeln.

6. Bremsanlage (50) für ein Schienenfahrzeug (10) mit einer Bremsregelungseinrichtung (51) nach einem der Ansprüche 1 bis 5.

7. Schienenfahrzeug (10) mit einer Bremsregelungseinrichtung (51) nach einem der Ansprüche 1 bis 5 und/oder einer Bremsanlage (50) nach Anspruch 6.

8. Verfahren zur Regelung einer Bremsanlage (50) eines Schienenfahrzeugs (10), mit den Schritten:

Erfassen und/oder Ermitteln eines Ist-Schlupfes eines ersten Rades (52) und eines Ist-Schlupfes eines zweiten Rades (54), wobei das erste Rad (52) und das zweite Rad (54) es vermögen, sich unabhängig voneinander zu drehen;
Ansteuern einer ersten Bremseinrichtung (56) der Bremsanlage (50), um das erste Rad (52) in einen ersten Schlupf-Sollwertbereich zu regeln, und einer zweiten Bremseinrichtung (56) der Bremsanlage (50), um das zweite Rad (54) in einen zweiten Schlupf-Sollwertbereich zu regeln, der sich von dem ersten Schlupf-Sollwertbereich unterscheidet, wobei der erste Schlupf-Sollwertbereich bei vorbestimmten ersten Bedingungen einen hohen Kraftschluss zwischen Rad und Schiene bietet, und der zweite Schlupf-Sollwertbereich bei vorbestimmten zweiten Bedingungen einen hohen Kraftschluss zwischen Rad und Schiene bietet, **dadurch gekennzeichnet dass** der erste Schlupf-Sollwertbereich bei einer wässrigen Zwischenschicht zwischen Rad und Schiene einen hohen Kraftschluss bietet und der zweite Schlupf-Sollwertbereich bei einer nicht-wässrigen Zwischenschicht einen hohen Kraftschluss bietet.

**Claims**

1. Brake regulation device (51) for a rail vehicle (10), which is or can be connected for controlling at least a first brake device (56) and a second brake device (58);
wherein the first brake device (56) is suitable for braking at least a first wheel (52) of the rail vehicle (10) and the second brake device (58) is suitable for braking at least a second wheel (54), wherein the first wheel (52) and the second wheel (54) are capable of rotating independently of each other; wherein the brake regulation device (51) is suitable for regulating the first brake device (56) and the second brake device (58) independently of each other; wherein the brake regulation device (51) is also designed to determine and/or record an actual slip of the first wheel (52) and an actual slip of the second wheel (54); and wherein the brake regulation device (51) is designed to regulate the first wheel (52) into a predetermined first target slip value range by controlling the first brake device (56), and to regulate the second wheel (54) into a predetermined second target slip value range, which is different from the first target slip value range, by controlling the second brake device (58), **characterised in that** the first target slip value range provides high adhesion between wheel and rail under predetermined first conditions, and the second target slip value range provides high adhesion between wheel and rail under predetermined second conditions, wherein the first target slip value range provides high adhesion if there is an aqueous intermediate layer between wheel and rail and the second target slip value range provides high adhesion if there is a non-aqueous intermediate layer.

2. Brake regulation device according to claim 1, wherein the brake regulation device (51) is designed to regulate the first wheel (52) and the second wheel (54) into a common target slip value range by controlling the first brake device (56) and the second brake device (58) following regulation of the first wheel (52) into the first target slip value range and the second wheel (54) into the second target slip value range.

3. Brake regulation device according to claim 2, wherein the brake regulation device (51) is designed to determine the common target slip value range based on a braking characteristic of the first wheel (52) and/or the second wheel (54).

4. Brake regulation device according to claim 2 or 3, wherein the brake device is designed to regulate the first wheel (52) from the common target slip value range into the first target slip value range by controlling the first brake device (56) and/or to regulate the second wheel (54) from the common target slip value range into the second target slip value range by controlling the second brake device (58).

5. Brake regulation device according to claim 2, 3 or 4, wherein wherein the brake device is designed to regulate the first wheel (52) from the common target slip value range into the second target slip value range by controlling the first brake device (56) and/or to regulate the second wheel (54) from the common target slip value range into the first target slip value range by controlling the second brake device (58).

6. Brake system (50) for a rail vehicle (10) with a brake regulation device (51) according to any of claims 1 to 5.

7. Rail vehicle (10) with a brake regulation device (51) according any of claims 1 to 5 and/or a brake system (50) according to claim 6.

8. Method for regulating a brake system (50) of a rail vehicle (10), with the steps of:

recording and/or determining an actual slip of a first wheel (52) and an actual slip of a second wheel (54), wherein the first wheel (52) and the second wheel (54) are capable of rotating independently of each other; controlling a first brake device (56) of the brake system (50) in order to regulate the first wheel (52) into a first target slip value range and a second brake device (56) of the brake system (50) in order to regulate the second wheel (54) into a second target slip value range that is different from the first target slip value range, wherein the first target slip value range provides high adhesion between wheel and rail under predetermined first conditions, and the second target slip value range provides high adhesion between wheel and rail under predetermined second conditions,

**characterised in that** the first target slip value range provides high adhesion if there is an aqueous intermediate layer between wheel and rail and the second target slip value range provides high adhesion if there is a non-aqueous intermediate layer.

**Revendications**

1. Dispositif (51) de régulation du freinage d'un véhicule (10) ferroviaire, qui est relié pour commander au moins à un premier dispositif (56) de frein et à un deuxième dispositif (58) de frein ou qui peut l'être; dans lequel le premier dispositif (56) de frein est propre à freiner au moins une première roue (52) du véhicule (10) ferroviaire et le deuxième dispositif (58) de frein est propre à freiner au moins une deuxième roue (54), la première roue (52) et la deuxième roue (54) pouvant tourner indépendamment l'une de l'autre; dans lequel le dispositif (51) de régulation du freinage est propre à réguler le premier dispositif (56) de frein et le deuxième dispositif (58) de frein, indépendamment l'un de l'autre;

dans lequel le dispositif (51) de régulation du freinage est constitué, en outre, pour déterminer et/ou détecter un glissement réel de la première roue (52) et un glissement réel de la deuxième roue (54) et dans lequel le dispositif (51) de régulation du freinage est constitué pour, par excitation du premier dispositif (56) de frein, réguler la première roue (52) dans une première plage de valeurs de consigne de glissement déterminée à l'avance et, par excitation du deuxième dispositif (58) de frein, réguler la deuxième roue (54) dans une deuxième plage de valeurs de consigne de glissement déterminée à l'avance, qui est différente de la première plage de valeurs de consigne de glissement,

**caractérisé en ce que**

la première plage de valeurs de consigne de glissement donne, dans de premières conditions déterminées à l'avance, une grande coopération de force entre une roue et un rail, et la deuxième plage de valeurs de consigne de glissement donne, dans de deuxièmes conditions déterminées à l'avance, une grande coopération de force entre une roue et un rail, la première plage de valeurs de consigne de glissement donnant, s'il y a une couche intermédiaire aqueuse entre une roue et un rail, une grande coopération de force, et la deuxième plage de valeurs de consigne de glissement donnant une grande coopération de force s'il y a une couche intermédiaire non aqueuse.

2. Dispositif de régulation d'un freinage suivant la revendication 1, dans lequel le dispositif (51) de régulation d'un freinage est constitué pour, après régulation de la première roue (52) dans la première plage de valeurs de consigne de glissement et de la deuxième roue (54) dans la deuxième plage de valeurs de consigne de glissement, réguler, par excitation du premier dispositif (56) de frein et du deuxième dispositif (58) de frein, la première roue (52) et la deuxième roue (54) dans une plage de valeurs de consigne de glissement commune.

3. Dispositif de régulation d'un freinage suivant la revendication 2, dans lequel le dispositif (51) de régulation d'un freinage est constitué pour déterminer la plage de valeurs de consigne de glissement commune sur la base d'un comportement au freinage de la première roue (52) et/ou de la deuxième roue (54).

4. Dispositif de régulation d'un freinage suivant la revendication 2 ou 3, dans lequel le dispositif de frein est constitué pour, par excitation du premier dispositif (56) de frein, faire passer la première roue (52) de la plage de valeurs de consigne de glissement commune à la première plage de valeurs de consigne de glissement et/ou, par excitation du deuxième dispositif (58) de frein, faire passer la deuxième roue (54) de la plage de valeurs de consigne de glissement commune à la deuxième plage de valeurs de consigne de glissement.

5. Dispositif de régulation d'un freinage suivant la revendication 2, 3 ou 4, dans lequel le dispositif de frein est conçu pour, par excitation du premier dispositif de frein, faire passer la première roue (52) de la plage de valeurs de consigne de glissement commune à la deuxième plage de valeurs de consigne de glissement et/ou, par excitation du deuxième dispositif (58) de frein, faire passer la deuxième roue (54) de la plage de valeurs de consigne de glissement commune à la première plage de valeurs de consigne de glissement.

6. Système (50) de freinage d'un véhicule (10) ferroviaire, ayant un dispositif (51) de régulation d'un freinage suivant l'une des revendications 1 à 5.

7. Véhicule (10) ferroviaire, ayant un dispositif (51) de régulation d'un freinage suivant l'une des revendications 1 à 5 et/ou un système (50) de freinage suivant la revendication 6.

8. Procédé de régulation d'un système (50) de freinage d'un véhicule (10) ferroviaire, comprenant les stades :

detection et/ou détermination d'un glissement réel d'une première roue (52) et d'un glissement réel d'une deuxième roue (54), la première roue (52) et la deuxième roue (54) pouvant tourner indépendamment l'une de l'autre;

excitation d'un premier dispositif (56) de frein du système (50) de freinage pour réguler la première roue (52) dans une première plage de valeurs de consigne de glissement et d'un deuxième dispositif (56) de frein du système (50) de freinage pour réguler la deuxième roue (54) dans une deuxième plage de valeurs de consigne de glissement, qui est différente de la première plage de valeurs de consigne de glissement, la première plage de valeurs de consigne de glissement donnant, dans des premières conditions déterminées à l'avance, une grande coopération de force entre une roue et un rail, et la deuxième plage de valeurs de consigne de glissement donnant, dans des deuxièmes conditions déterminées l'avance, une grande coopération de force entre une roue et un rail,

**caractérisé en ce que**

la première plage de valeurs de consigne de glissement donne une grande coopération de force, s'il y a une couche intermédiaire aqueuse entre une roue et un rail, et la deuxième plage de valeurs de consigne de glissement donne une grande coopération de force, s'il y a une couche intermédiaire non aqueuse.

Fig. 1

EP 2 753 509 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4333281 A1